(19) Europäisches Patentamt
European Patent Office
Office européen des brevets

(11) **EP 4 787 318 A1**

(12) **EUROPEAN PATENT APPLICATION**
published in accordance with Art. 153(4) EPC

(43) Date of publication:
**05.08.2026  Bulletin 2026/32**

(21) Application number: **24927631.2**

(22) Date of filing: **16.12.2024**

(51) International Patent Classification (IPC):
*G06T 11/40* (2006.01)

(52) Cooperative Patent Classification (CPC):
**G06T 11/40**

(86) International application number:
**PCT/CN2024/139656**

(87) International publication number:
**WO 2026/129092 (25.06.2026 Gazette 2026/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **VeriSilicon Microelectronics (Shanghai) Co., Ltd.**
**Shanghai 201203 (CN)**
• **VeriSilicon Technology (Shanghai) Co., Ltd.**
**Shanghai 201306 (CN)**

(72) Inventors:
• **MIAO, Zemeng**
**Shanghai 201203 (CN)**
• **CHI, Cheng**
**Shanghai 201203 (CN)**
• **WU, Jianbing**
**Shanghai 201203 (CN)**
• **JIANG, Fulong**
**Shanghai 201203 (CN)**
• **QIN, Kui**
**Shanghai 201203 (CN)**

(74) Representative: **Bryn Aarflot AS**
**Patent**
**Stortingsgata 8**
**0161 Oslo (NO)**

(54) **IMAGE PROCESSING METHOD, IMAGE PROCESSOR, ELECTRONIC DEVICE, STORAGE MEDIUM AND PRODUCT**

(57)    The embodiments of the present invention provide an image processing method, an image processor, an electronic device, a storage medium, and a program product, wherein the image processing method includes: obtaining a first barycentric coordinate of a first vertex relative to an initial primitive in an image frame, wherein the first vertex is a vertex of the first primitive in a clip space; converting the first barycentric coordinate to a screen space to obtain a second barycentric coordinate of a second vertex relative to the initial primitive; obtaining a third barycentric coordinate of a sample point relative to the second primitive; obtaining a fourth barycentric coordinate of the sample point relative to the initial primitive based on the second barycentric coordinate and the third barycentric coordinate; obtaining second attribute information of the sample point based on the fourth barycentric coordinates and first attribute information; and shading the sample point based on the second attribute information. The above calculation scheme for calculating the attribute value of the sample point reduces the number of linear interpolations which is beneficial to improve the calculation efficiency.

FIG. 2

## Description

### TECHNICAL FIELD

The present invention relates to the technical field of image processing, and specifically to an image processing method, an image processor, an electronic device, a storage medium, and a product.

### BACKGROUND ART

In computer graphics, before shading any sample point inside a primitive, an attribute value (the attributes include color, texture, etc.) of the sample point is calculated, which in turn uses the attribute value to shade the sample point, so that the shading result is more realistic and detailed.

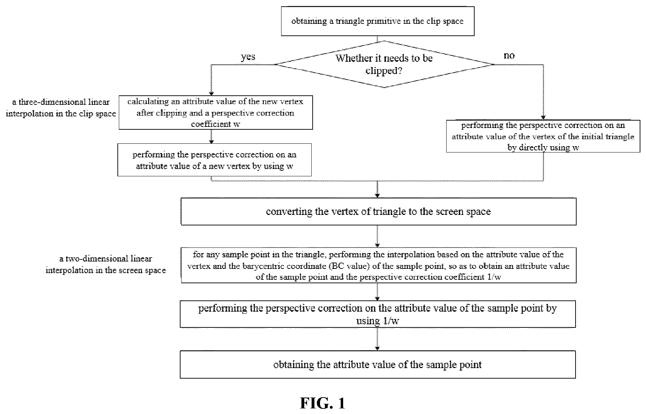

Referring to FIG. 1, in the related art, the acquisition scheme of an attribute value of a sample point is generally to obtain an attribute value of a primitive vertex in the clip space first, and then, after transforming the primitive to screen space, the interpolation is performed based on the attribute value of the primitive vertex and the barycentric coordinate of the sample point, so as to obtain the attribute value of the sample point. Taking a triangle primitive as an example, the above scheme needs to perform at least one three-dimensional linear interpolation and one two-dimensional linear interpolation for any type of attribute value, When there are many types of attributes to be calculated, the above technical scheme needs to perform multiple floating-point/fixed-point multiplication/addition operations in order to obtain the attribute value required for shading, and the computational complexity of the algorithm is high.

### SUMMARY

The objective of embodiments of the present invention is to provide an image processing method, an image processor, an electronic device, a storage medium, and a product for improving the computational complexity of an acquisition scheme for an attribute value of a sample point.

In a first aspect, the embodiments of the present invention provide an image processing method, wherein the method includes: obtaining a first barycentric coordinate of a first vertex relative to an initial primitive in an image frame, wherein the first vertex is a vertex of the first primitive in a clip space; and the first primitive includes a new primitive generated after performing a clipping process on the initial primitive, and/or the initial primitive without the clipping process; converting the first barycentric coordinate to a screen space to obtain a second barycentric coordinate of a second vertex relative to the initial primitive, wherein the second vertex is a vertex of a second primitive, and the second primitive is obtained by converting the first primitive to the screen space; obtaining a third barycentric coordinate of a sample point relative to the second primitive, wherein the sample point is a sample point in the second primitive; obtaining a fourth barycentric coordinate of the sample point relative to the initial primitive based on the second barycentric coordinate and the third barycentric coordinate; obtaining second attribute information of the sample point based on the fourth barycentric coordinates and first attribute information, wherein the first attribute information is attribute information of an initial vertex, and the initial vertex is a vertex of the initial primitive; and shading the sample point based on the second attribute information.

In the realization of the above scheme, based on the invariant property of a sum of components of the barycentric coordinate being one, for the primitive after the clipping process, the attribute value of the new vertex in the clip space is no longer directly calculated, but the barycentric coordinate of the new vertex after clipping is calculated relative to the initial primitive; the barycentric coordinate of the sample point relative to the initial primitive is obtained based on the barycentric coordinate of the primitive vertex relative to the initial primitive in the screen space; and finally the attribute value of the sample point is obtained based on the attribute value of the initial primitive vertex and the barycentric coordinate of the sample point relative to the initial primitive. On the one hand, the above calculation scheme for calculating the attribute value of the sample point reduces the number of linear interpolations, which is beneficial to improve the calculation efficiency; and on the other hand, compared with the calculation scheme used in the related art, the above scheme simplifies the calculation process, which avoids frequent conversions and repeated calculations between the clip space and the screen space, and is beneficial to improve the calculation efficiency.

In one realization of the first aspect, the method further includes: determining whether the types or the number of attributes to be calculated is larger than a preset threshold, wherein when the types or the number of attributes to be calculated is larger than the preset threshold, performing a step: obtaining the first barycentric coordinate of the first vertex relative to the initial primitive in the image frame and the first perspective correction coefficient.

In the realization of the above scheme, the adaptive adjustment of the sample point attribute value calculation scheme is realized through the types or the number of attributes to be calculated and the preset threshold, which is beneficial to further reduce the calculation amount of the sample point attribute value calculation scheme, thus improving the computational efficiency of the above image processing method.

In one realization of the first aspect, the method further includes: when the types or the number of attributes to be calculated is not larger than the preset threshold, performing the following steps: obtaining the first barycentric coordinate of the first vertex relative to initial primitive, third attribute information, and a third perspective correction coefficient; performing a perspective correction on the third attribute information by using the third perspective correction coefficient; obtaining a third barycentric coordinate of the sample point relative to the second primitive and a fourth perspective correction coefficient; obtaining the second attribute information of the sample point based on the third barycentric coordinates and the third attribute information after performing the perspective correction; performing the perspective correction on the second attribute information by using the fourth perspective correction coefficient; and shading the sample point based on the second attribute information after the perspective correction.

In the realization process of the above scheme, when the types or the number of attributes to be calculated is not larger than the preset threshold, the attribute value of the sample point in the screen space is obtained by the method of directly calculating the attribute value of the new vertex in the clip space, thereby realizing adaptive selection to the sample point attribute value calculation scheme, which is beneficial to further reduce the calculation amount of the sample point attribute value calculation scheme, thus improving the computational efficiency of the above image processing method.

In one realization of the first aspect, the step of obtaining the third attribute information includes: performing a three-dimensional linear interpolation based on the first attribute information and the first barycentric coordinate of the initial primitive for the new primitive generated after the clipping process, so as to obtain the third attribute information of the new primitive.

In the realization of the above scheme, the three-dimensional linear interpolation is performed directly based on the first attribute information and the first barycentric coordinate of the initial primitive, which can quickly obtain the third attribute information of the new primitive in the clip space, and is beneficial to improve the computational efficiency of the above image processing method.

In one realization of the first aspect, the step of obtaining the second attribute information of the sample point based on the third barycentric coordinates and the third attribute information after performing the perspective correction includes: performing a two-dimensional linear interpolation based on the third barycentric coordinate and the third attribute information after the perspective correction, so as to obtain the second attribute information of the sample point.

In the realization of the above scheme, the two-dimensional linear interpolation is performed directly based on the third barycentric coordinate and the third attribute information after the perspective correction, so as to obtain the second attribute information of the sample point, which can quickly obtain the attribute value of the sample point in the screen space, and is beneficial to improve the computational efficiency of the above image processing method.

In one realization of the first aspect, the step of obtaining the first barycentric coordinate includes: performing the three-dimensional linear interpolation based on a clipping position of the new vertex and the barycentric coordinate of the initial vertex for the new vertex generated after the clipping process, so as to obtain a barycentric coordinate of the new vertex relative to the initial primitive.

In the realization of the above scheme, for the new vertex generated after the clipping process, the barycentric coordinate of the new vertex relative to the initial primitive can be obtained by performing the three-dimensional linear interpolation based on the clipping position of the new vertex and the barycentric coordinate of the initial vertex. On the one hand, it can quickly obtain the first barycentric coordinates by the method of three-dimensional linear interpolation, which is beneficial to improve the computational efficiency of the above image processing method; and on the other hand, the interpolation scheme can be applied to multiple forms of primitives, so that the above image processing method can be applied to more application scenarios, which is beneficial to improve the adaptability of the above image processing method.

In one realization of the first aspect, the step of obtaining a fourth barycentric coordinate of the sample point relative to the initial primitive based on the second barycentric coordinate and the third barycentric coordinate includes: performing a two-dimensional linear interpolation based on the second barycentric coordinate and the third barycentric coordinate, so as to obtain the fourth barycentric coordinate of the sample point relative to the initial primitive.

In the realization of the above scheme, the fourth barycentric coordinate of the sample point in the screen space relative to the initial primitive in the clip space can be obtained by the method of two-dimensional linear interpolation, and then the attribute value of the sample point can be determined by the fourth barycentric coordinate and the first attribute information of the initial primitive. Compared with the scheme of interpolating the attribute value directly in the related art, the above scheme simplifies the computation process, which is beneficial to improve the computational efficiency of the above image processing method.

In one realization of the first aspect, the step of obtaining second attribute information of the sample point based on the fourth barycentric coordinate after performing the perspective correction and first attribute information includes: performing the two-dimensional linear interpolation based on the fourth barycentric coordinate after performing the perspective correction and the first attribute information, so as to obtain the second attribute information of the sample point.

In the realization of the above scheme, the second attribute information of the sample point can be obtained by using the method of two-dimensional linear interpolation by utilizing the fourth barycentric coordinate and the first attribute information both in the clip space, which simplifies the calculation process of the attribute value and is beneficial to improve the computational efficiency of the above image processing method.

In one realization of the first aspect, the three-dimensional linear interpolation includes: a three-dimensional linear interpolation of a barycentric coordinate, and/or a three-dimensional linear interpolation of a plane equation.

In the realization process of the above scheme, the three-dimensional linear interpolation can be selected from at least one of the three-dimensional linear interpolation of the barycentric coordinate and the three-dimensional linear interpolation of the plane equation, so that the above image processing method can be applied to more application scenarios, which is beneficial to improve the flexibility and adaptability of the above image processing method.

In one realization of the first aspect, the two-dimensional linear interpolation includes: a two-dimensional linear interpolation of a barycentric coordinate, and/or a two-dimensional linear interpolation of a plane equation.

In the realization of the above scheme, the two-dimensional linear interpolation can be selected from at least one of the two-dimensional linear interpolation of the barycentric coordinate and the two-dimensional linear interpolation of the plane equation, so that the above image processing method can be applied to more application scenarios, which is beneficial to improve the flexibility and adaptability of the above image processing method.

In one realization of the first aspect, the method further includes: storing attribute information of a reusable vertex at the same storage address, wherein the reusable vertex is configured to characterize the same vertex between target primitives, and the target primitives are primitives that are located in the same space and have at least one primitive vertex overlapping.

In the realization of the above scheme, the attribute information of the reusable vertexes is stored in the same storage address. On the one hand, it can reduce the repetitive calculation amount for the same vertex, which is beneficial to improve the computational efficiency of the above image processing method; and on the other hand, it can save the storage address space, which is beneficial to improve the area requirement of the above image processing method on the hardware.

In a second aspect, the embodiments of the present invention provide an image processor, including:

a first acquisition module, configured to obtain a first barycentric coordinate of a first vertex relative to an initial primitive in an image frame and a first perspective correction coefficient, wherein the first vertex is a vertex of the first primitive in a clip space; the first primitive includes a new primitive generated after performing a clipping process on the initial primitive, and/or the initial primitive without the clipping process; and the initial vertex is a vertex of the initial primitive;

a first perspective correction module, configured to perform a perspective correction on the first barycentric coordinate by using the first perspective correction coefficient;

a second acquisition module, configured to convert the first barycentric coordinate after performing the perspective correction to a screen space, so as to obtain a second barycentric coordinate of the second vertex relative to the initial primitive, wherein the second vertex is a vertex of a second primitive, and the second primitive is obtained by converting the first primitive to the screen space;

a third acquisition module, configured to obtain a third barycentric coordinate of a sample point relative to the second primitive, wherein the sample point is a sample point in the second primitive;

a fourth acquisition module, configured to obtain a fourth barycentric coordinate of the sample point relative to the initial primitive and the second perspective correction coefficient based on the second barycentric coordinate and the third barycentric coordinate;

a second perspective correction module, configured to perform a perspective correction on the fourth barycentric coordinate by using the second perspective correction coefficient;

a fifth acquisition module, configured to obtain second attribute information of the sample point based on the fourth barycentric coordinate after performing the perspective correction and first attribute information, wherein the first attribute information is attribute information of the initial vertex; and

a first shading module, configured to shade the sample point based on the second attribute information.

In a third aspect, the embodiments of the present invention provide an electronic device, including: an image processor, wherein the image processor is an image processor provided by the second aspect or any one possible realization in the second aspect.

In a fourth aspect, the embodiments of the present invention further provide a computer readable storage medium, wherein the computer readable storage medium stores the computer program instructions, and when read and run by the processor, the computer program instructions execute the method provided by the first aspect or any of the possible implementations of the first aspect.

In a fifth aspect, the embodiments of the present invention provide a computer program product, and the computer program product includes computer programs, wherein when read and run by the processor, the computer program instructions execute the method provided by the first aspect or any of the possible implementations of the first aspect.

Other features and advantages of the present invention will be illustrated in the subsequent specification, and partial will become apparent from the specification, or will be understood by implementing embodiments of the present invention. The purposes and other advantages of the present invention can be realized and obtained by structures specifically indicated in the written specification, claims, and drawings.

## BRIEF DESCRIPTION OF DRAWINGS

In order to more clearly illustrate the technical solutions in the embodiments of the present invention, the drawings to be used in the embodiments of the present invention will be briefly introduced below. For persons of ordinary skill in the field, other relevant drawings can be obtained according to these drawings without inventive efforts.

FIG. 1 shows a schematic flow diagram of an acquisition scheme of an attribute value of a sample point in the related art;

FIG. 2 shows a schematic flow diagram of an image processing method provided by the embodiments of the present invention;

FIG. 3 shows a schematic diagram of a triangle primitive after a clip operation in a scene provided by the embodiments of the present invention;

FIG. 4 shows a physical schematic diagram of a barycentric coordinate of any one point inside a triangle primitive provided by the embodiments of the present invention;

FIG. 5 shows a schematic diagram of a new primitive generated after a clip operation in a scene provided by the embodiments of the present invention;

FIG. 6 shows another schematic flow diagram of an image processing method provided by the embodiments of the present invention; and

FIG. 7 shows a schematic structure diagram of an image processor provided by the embodiments of the present invention.

## DETAILED DESCRIPTION OF EMBODIMENTS

The technical solutions in the embodiments of the present invention will be described below in conjunction with the drawings in the embodiments of the present invention. The following embodiments are intended only to more clearly illustrate the technical solutions of the present invention, and are therefore intended only as examples and not to limit the scope of protection of the present invention in this way.

The embodiments of the present invention provide an image processing method. In this method, based on the invariant property of a sum of components of the barycentric coordinate (BC) being one, for the primitive after the clipping process, the attribute value of the new vertex in the clip space is no longer directly calculated, but the barycentric coordinate of the new vertex after clipping is calculated relative to the initial primitive; the barycentric coordinate of the sample point relative to the initial primitive is obtained based on the barycentric coordinate of the primitive vertex relative to the initial primitive in the screen space; and finally the attribute value of the sample point is obtained based on the attribute value of the initial primitive vertex and the barycentric coordinate of the sample point relative to the initial primitive. On the one hand, the above calculation scheme for calculating the attribute value of the sample point reduces the number of linear interpolations, which is beneficial to improve the calculation efficiency; and on the other hand, compared with the calculation scheme used in the related art, the above scheme simplifies the calculation process, which avoids frequent conversions and repeated calculations between the clip space and the screen space, and is beneficial to improve the calculation efficiency.

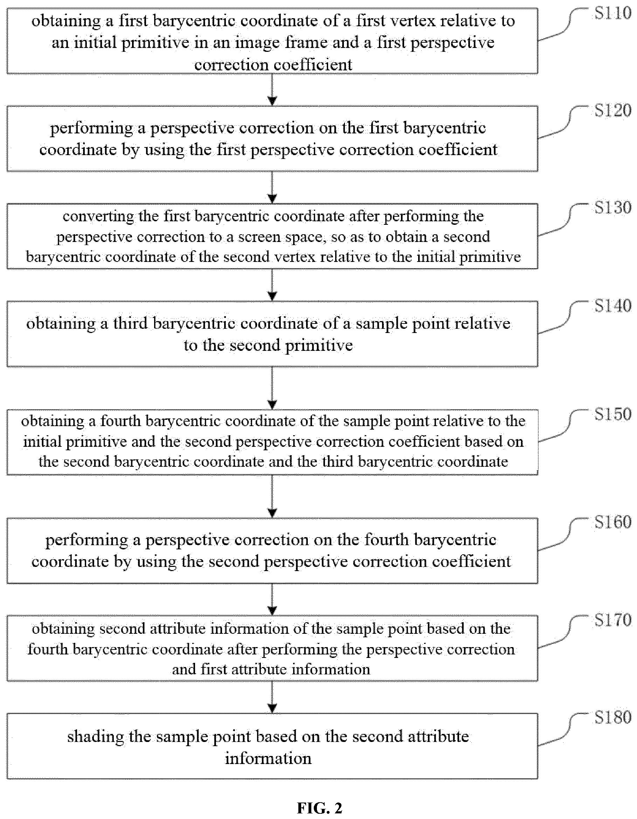

The above image processing method is described in detail below. Referring to FIG. 2, the embodiments of the present invention provide an image processing method, wherein the method includes the following steps:

step S110: obtaining a first barycentric coordinate of a first vertex relative to an initial primitive in an image frame and a first perspective correction coefficient, wherein the first vertex is a vertex of the first primitive in a clip space; the first primitive includes a new primitive generated after performing a clipping process on the initial primitive, and/or the initial primitive without the clipping process; and the initial vertex is a vertex of the initial primitive;

step S120: performing a perspective correction on the first barycentric coordinate by using the first perspective correction coefficient;

step 130: converting the first barycentric coordinate after performing the perspective correction to a screen space, so as to obtain a second barycentric coordinate of the second vertex relative to the initial primitive, wherein the second vertex is a vertex of a second primitive, and the second primitive is obtained by converting the first primitive to the screen space;

step S140: obtaining a third barycentric coordinate of a sample point relative to the second primitive, wherein the sample point is a sample point in the second primitive;

step S150: obtaining a fourth barycentric coordinate of the sample point relative to the initial primitive and the second perspective correction coefficient based on the second barycentric coordinate and the third barycentric coordinate;

step 160: performing a perspective correction on the fourth barycentric coordinate by using the second perspective correction coefficient;

step S170: obtaining second attribute information of the sample point based on the fourth barycentric coordinate after performing the perspective correction and first attribute information, wherein the first attribute information is attribute information of the initial vertex; and

step S180: shading the sample point based on the second attribute information.

The space corresponding to the barycentric coordinate related to the above steps S110 to S180 is described below.

The barycentric coordinate relative to the clip space includes: the first barycentric coordinate, the second barycentric coordinate, and the fourth barycentric coordinate.

The barycentric coordinate relative to the screen space includes: the third barycentric coordinate.

The use of the above image processing method in the image shading process is described below.

The image shading process generally includes the following 6 steps.

(1) Vertex processing mainly includes:

determining primitive vertexes, wherein these vertexes include position information in three-dimensional space (e.g., (x, y, z) coordinates) and other possible attribute information, such as color and texture; and

transforming the primitive vertexes, including model transformation, view transformation, projection transformations, etc., and converting the primitive vertexes from the model space to the clip space.

(2) Clip operation mainly includes:

determining whether the primitive is completely inside the optic frustum in the clip space, wherein if the primitive is partially or completely outside the optic frustum, the clip operation is required.

The clip operation will generate new vertexes, wherein these new vertexes are located on the boundary of the optic frustum, and form new primitives together with vertexes of the initial primitive in the optic frustum.

(3) Coordinate transformation mainly includes:

converting the vertex coordinates of the primitives in the clip space to the screen space in preparation for the next rasterization process.

(4) Rasterization mainly includes:

converting the primitives into a series of sample points in the screen space, wherein theses sample points will be used for image shading.

The process of rasterization includes: determining which sample points are located inside the triangles, and calculating the attribute values for these sample points.

(5) Coloring mainly includes:

coloring the sample points based on the attribute values of the sample points.

(6) Synthesis mainly includes:

synthesizing the colorized sample points into the final image, which usually includes merging the currently shaded primitive with other already shaded primitives or backgrounds.

The steps S110 to step S180 in the above image processing method are applied to the process after performing the clip operation in the above shading scheme, wherein the first vertex in step S110 refers to the vertex of the primitive after performing the above clip operation; the process of converting the first barycentric coordinate to the screen space in step S130 is the above coordinate conversion process; the sample points in step S140 are the sample points determined in the above rasterization process, the calculation step of the attribute value of the sample points involved in steps S140 to step S170 is the above rasterization step; and the process of shading the sample points based on the second attribute information in step S180 can include the above coloring step and synthesis step.

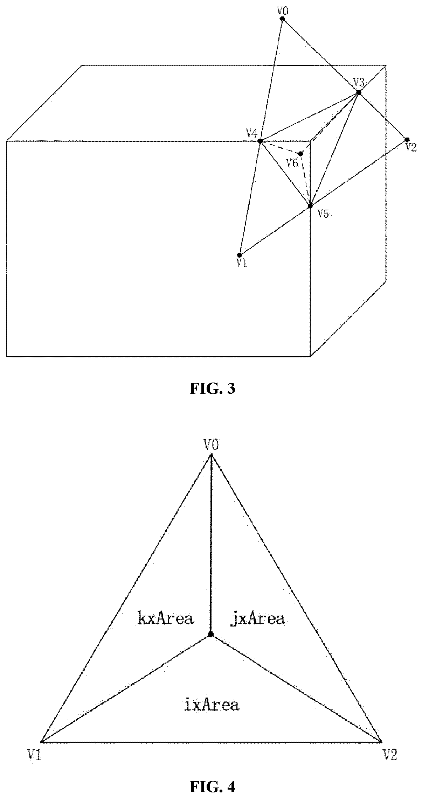

The following is a proof of the invariance of the property that the sum of barycentric coordinate components equals one during the transformation from clip space to screen space in the above scheme, i.e., a proof that the fourth barycentric coordinate of the sample point relative to the initial primitive obtained by using the above image processing method, is equivalent to the barycentric coordinate of the corresponding point relative to the initial primitive in the clip space. The following is an example of a triangle primitive. Referring to FIG. 3, the vertexes of the initial triangle are V0, V1, and V2; the vertexes of the triangle generated after the clip operation are V3, V4, and V5; and the sample point with the attribute value to be calculated is V6. It can be understood that V6 should be a sample point of the triangle primitive in the screen space, wherein V6 shown in FIG. 3 is a point in the clip space corresponding to the sample point V6. The variable subscript represents the vertex; the superscript represents the corresponding space or triangle; the clip denotes the clip space or initial triangle; and the screen denotes the triangle primitive or screen space obtained by clipping. The proof process is as follows.

Referring to FIG. 4, for a triangle with vertexes V0, V1, and V2, the barycentric coordinate ($i, j, k$) is the position representation of a certain point in the triangle primitive relative to the three vertexes of the triangle primitive, and the components $i$, $j$, and $k$ of the barycentric coordinate are the values of BC (barycentric coordinates) of the point ($x, y$) within the triangle primitive relative to the vertexes V0, V1, and V2, respectively. The physical meaning of the barycentric coordinate of a certain point ($x, y$) in the triangle primitive is a ratio of the area of a triangle formed by the point ($x, y$) and the opposite side of a certain vertex to the area of the original triangle, that is:

$$i = \frac{ixArea}{ixArea + jxArea + kxArea},$$

$$j = \frac{jxArea}{ixArea + jxArea + kxAre},$$

$$k = \frac{kxArea}{ixArea + jxArea + kxAr}.$$

For a point ($x_{clip}, y_{clip}, z_{clip}$) in the clip space, the components $i^{clip}_{(x,y)}$, $j^{clip}_{(x,y)}$ and $k^{clip}_{(x,y)}$ of its barycentric coordinate relative to the primitive vertex of the clip space of the clip space satisfy: $i^{clip}_{(x,y)} + j^{clip}_{(x,y)} + k^{clip}_{(x,y)} = 1$.

For a point ($x_{sceen}, y_{sceen}$) in the screen space, the components $i^{sceen}_{(x,y)}$, $j^{sceen}_{(x,y)}$, and $k^{sceen}_{(x,y)}$ of its barycentric coordinate relative to the primitive vertex of the screen space of the clip space satisfy:

$$i^{sceen}_{(x,y)} + j^{sceen}_{(x,y)} + k^{sceen}_{(x,y)} = 1$$

Let w be the perspective correction coefficient of a point inside the triangle, the perspective correction coefficient is mainly used to correct perspective distortion due to the perspective projection. Then, the relationship between the components $i^{sceen}_6$, $j^{sceen}_6$, and $k^{sceen}_6$ of the barycentric coordinate in the screen space and the components $i^{clip}_{(x,y)}$, $j^{clip}_{(x,y)}$, and $k^{clip}_{(x,y)}$ in the clip space is

$$i^{clip}_6 = \frac{i^{clip}_3}{w^{clip}_3} \cdot i^{sceen}_6 + \frac{i^{clip}_4}{w^{clip}_4} \cdot j^{sceen}_6 + \frac{i^{clip}_5}{w^{clip}_5} \cdot k^{sceen}_6,$$

$$j^{clip}_6 = \frac{j^{clip}_3}{w^{clip}_3} \cdot i^{sceen}_6 + \frac{j^{clip}_4}{w^{clip}_4} \cdot j^{sceen}_6 + \frac{j^{clip}_5}{w^{clip}_5} \cdot k^{sceen}_6,$$

$$k^{clip}_6 = \frac{k^{clip}_3}{w^{clip}_3} \cdot i^{sceen}_6 + \frac{k^{clip}_4}{w^{clip}_4} \cdot j^{sceen}_6 + \frac{k^{clip}_5}{w^{clip}_5} \cdot k^{sceen}_6,$$

$$\frac{1}{w_6}^{clip} = \frac{1}{w_3^{clip}} \cdot i_6^{sceen} + \frac{1}{w_4^{clip}} \cdot j_6^{sceen} + \frac{1}{w_5^{clip}} \cdot k_6^{sceen}.$$

If it is necessary to prove that although the coordinates change under perspective transformation, the property that the sum of the components of the barycentric coordinate equals one remains unchanged, that is, it is necessary to prove:

$$\frac{i_6^{clip} + j_6^{clip} + k_6^{clip}}{\frac{1}{w_6}^{clip}} = 1.$$

Substituting the above $i_6^{clip}, j_6^{clip}, k_6^{clip}$ and $\frac{1}{w_6}^{clip}$ into the above $i_6^{clip} + j_6^{clip} + k_6^{clip}$, it can obtain:

$$i_6^{clip} + j_6^{clip} + k_6^{clip} = \left( \frac{i_3^{clip}}{w_3^{clip}} \cdot i_6^{sceen} + \frac{i_4^{clip}}{w_4^{clip}} \cdot j_6^{sceen} + \frac{i_5^{clip}}{w_5^{clip}} \cdot k_6^{sceen} \right) + \left( \frac{j_3^{clip}}{w_3^{clip}} \cdot i_6^{sceen} + \frac{j_4^{clip}}{w_4^{clip}} \cdot j_6^{sceen} + \frac{j_5^{clip}}{w_5^{clip}} \cdot k_6^{sceen} \right) + \left( \frac{k_3^{clip}}{w_3^{clip}} \cdot i_6^{sceen} + \frac{k_4^{clip}}{w_4^{clip}} \cdot j_6^{sceen} + \frac{k_5^{clip}}{w_5^{clip}} \cdot k_6^{sceen} \right).$$

Combining like terms:

$$i_6^{clip} + j_6^{clip} + k_6^{clip} = \frac{i_3^{clip} + j_3^{clip} + k_3^{clip}}{w_3^{clip}} \cdot i_6^{sceen} + \frac{i_4^{clip} + j_4^{clip} + k_4^{clip}}{w_4^{clip}} \cdot j_6^{sceen} + \frac{i_5^{clip} + j_5^{clip} + k_5^{clip}}{w_5^{clip}} \cdot k_6^{sceen}.$$

As:

$$i_3^{clip} + j_3^{clip} + k_3^{clip} = 1,$$

$$i_4^{clip} + j_4^{clip} + k_4^{clip} = 1,$$

$$i_5^{clip} + j_5^{clip} + k_5^{clip} = 1,$$

it can get:

$$i_6^{clip} + j_6^{clip} + k_6^{clip} = \frac{1}{w_3^{clip}} \cdot i_6^{sceen} + \frac{1}{w_4^{clip}} \cdot j_6^{sceen} + \frac{1}{w_5^{clip}} \cdot k_6^{sceen}.$$

Then:

$$\frac{i_6^{clip} + j_6^{clip} + k_6^{clip}}{\frac{1}{w_6}^{clip}} = \frac{\frac{1}{w_3^{clip}} \cdot i_6^{sceen} + \frac{1}{w_4^{clip}} \cdot j_6^{sceen} + \frac{1}{w_5^{clip}} \cdot k_6^{sceen}}{\frac{1}{w_3^{clip}} \cdot i_6^{sceen} + \frac{1}{w_4^{clip}} \cdot j_6^{sceen} + \frac{1}{w_5^{clip}} \cdot k_6^{sceen}} = 1.$$

Thus, it has been proved:

$$\frac{i_6^{clip}+j_6^{clip}+k_6^{clip}}{\frac{1}{w_6}^{clip}} = 1.$$

In summary, it can be obtained:
although the coordinates change under perspective transformation, the property that the sum of the components of the barycentric coordinate equals one remains unchanged.

Before introducing the optional embodiments of steps S110 to S180 described above, the principle of obtaining attribute values involved in the embodiments of the present invention is described by taking the triangle primitive shown in FIG. 4 as an example.

The attribute values for a sample point in the triangle can be obtained by linear interpolation as follows:

$$Attr_{(x_0,y_0)} = Attr_{V0} \cdot i + Attr_{V1} \cdot j + Attr_{V2} \cdot k,$$

where $Attr_{(x_0,y_0)}$ is the attribute value of the point $(x_0,y_0)$; $(i,j,k)$ is the barycentric coordinate of the point $(x_0,y_0)$ relative to the triangle primitive taking V0, V1, and V2 as vertexes; the $i, j,$ and k can be called as the barycentric coordinate coefficient in the above interpolation scheme; the $Attr_{V0}$, $Attr_{V1}$, and $Attr_{V2}$ are attribute values of the vertexes V0, V1, and V2.

The optional embodiments of the above steps S110 to S180 are described below.

It can be understood that the first vertex in step S110 is the vertex of the first primitive in the clip space, and the first primitive includes at least one of the following.

(1) A new primitive generated by the clipping process to the initial primitive.

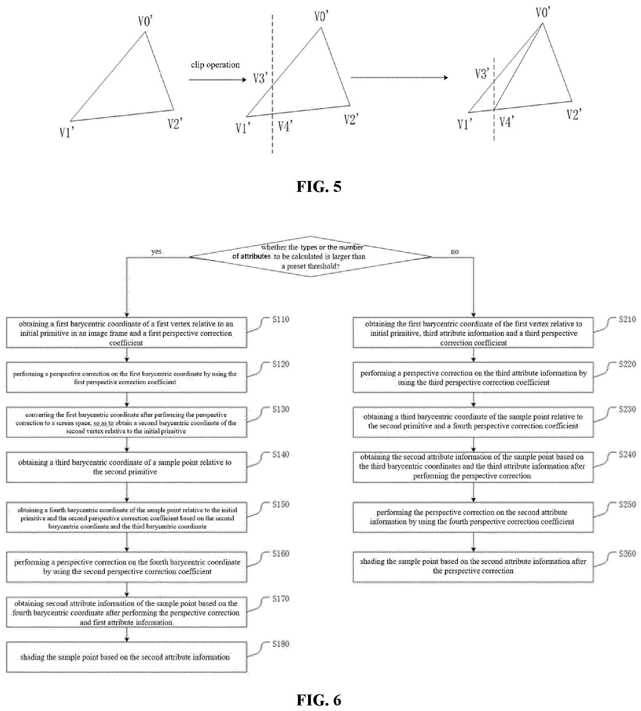

Referring to FIG. 5, taking an initial primitive of a triangle in a certain scene as an example, the three vertexes of the initial primitive are V0', V1', and V2'. and new vertexes generated after the clipping process are V3' and V4'. The new primitives generated after the clipping process, for example, include a triangle primitive composed of vertexes V0', V3', and V4', and a triangle primitive composed of vertexes V0', V2', and V4'.

(2) The initial primitives without the clipping process.

It can be understood that the new primitives generated by the clipping process and the initial primitives without the clipping process included in the above first primitive do not refer to two processing states of the same primitive before and after the clipping process, but rather refer to the new primitives generated by the clip operation and the initial primitives without the clipping process of all the primitives after the clip operation.

The scheme of the above step S110 for obtaining the first barycentric coordinate is introduced below.

As an optional embodiment of the above image processing method, the above step S110 for obtaining the first barycentric coordinates includes:

for the new vertex generated after the clipping process, obtaining the barycentric coordinate of the new vertex relative to the initial primitive based on the clipping position of the new vertex and the barycentric coordinate of the initial vertex. The embodiment is, for example, as follows.

It can be understood that the above first vertex relative to the first barycentric coordinate of the initial primitive includes: the barycentric coordinate of the new vertex generated after the clipping process relative to the initial primitive, and/or the barycentric coordinate of the initial vertex without the clipping process relative to the initial primitive.

The clipping interface equation can be determined during the clip operation; the clipping position of the new vertex can be determined based on the clipping interface equation and the initial vertex position of the initial primitive; and then the three-dimensional linear interpolation is carried out based on the clipping position and the barycentric coordinates of the initial vertex. Taking the new vertex V3' in the scene shown in FIG. 5 as an example, the new vertex V3' is the intersection of the edge V0'V1' of the initial triangle and the clipping interface, and the new vertex V3' is located on the line V0'V1'. The position of the new vertex V3' can be parametrized as:

$$V3' = tV0' + (1-t)V1', 0 \le t \le 1.$$

It can be determined by the method of three-dimensional linear interpolation after determining the parameter t based on the clipping position of the new vertex V3'.

Additionally, it can be understood that in addition to the interpolation, the barycentric coordinate of the new vertex relative to the initial primitive can be calculated directly based on the clipping position of the new vertex according to the physical definition of the above barycentric coordinate.

In addition, it is understood that for the initial vertex of the initial primitive without the clipping process, the barycentric coordinate can be obtained directly without the need to be processed by the three-dimensional linear interpolation.

In the above scheme, for the new vertex generated after the clipping process, the barycentric coordinate of the new vertex relative to the initial primitive can be obtained by performing the three-dimensional linear interpolation based on the clipping position of the new vertex and the barycentric coordinate of the initial vertex. On the one hand, it can quickly obtain the first barycentric coordinates by the method of three-dimensional linear interpolation, which is beneficial to improve the computational efficiency of the above image processing method; and on the other hand, the interpolation scheme can be applied to multiple forms of primitives, so that the above image processing method can be applied to more application scenarios, which is beneficial to improve the adaptability of the above image processing method.

It can be understood that in the above step S110, the first perspective correction coefficient of the new vertexes generated by the clipping process can also be obtained by the method of three-dimensional linear interpolation.

The scheme of perspective correction in the above step 120 is introduced below.

In the computer graphic, the perspective projection is a common projection method, which is used to simulate the way the human eye views objects, so that the distant objects appear smaller and nearer objects appear larger. This perspective effect is particularly important when shading the 3D scene because it can enhance the realism and three-dimensionality of the scene. However, during the rasterization, if the interpolation or texture mapping is directly applied to the transformed vertexes without perspective correction, the perspective effect will be lost. Because the points inside the figure are not involved in the transformation operation, the perspective effect is not correctly represented. Therefore, the perspective correction can be applied to the barycentric coordinate, so as to reserve the perspective effect of the primitive vertex.

Exemplarily, the perspective correction coefficient is generally obtained by the depth value of the vertex, so as to ensure that the attribute value of the sample point obtained in screen space is consistent with the attribute value in the actual 3D space.

For the scheme of converting the barycentric coordinate to the screen space in the above step S130, please refer to the relationship between the components $i_6^{screen}$, $j_6^{screen}$, and $k_6^{screen}$ of the barycentric coordinate in the screen space and the barycentric coordinate in the clip space, which will not be repeated herein.

It is noted that the second barycentric coordinate obtained by converting the first barycentric coordinate to screen space in the above step S130 is the barycentric coordinate of the second vertex relative to the initial primitive in the clip space, rather than the barycentric coordinate relative to the second primitive in screen space.

The scheme of the above step S140 for obtaining the third barycentric coordinate of the sample point relative to the second primitive is described below.

Exemplarily, the specific location of the sample point can be determined after performing the rasterization on the primitive. The third barycentric coordinate of the sample point relative to the second primitive can be calculated from the specific location of the sample point and the physical definition of the above barycentric coordinate.

The scheme of the above step S150 for obtaining the fourth barycentric coordinate of the sample point relative to the initial primitive is described below.

As an optional embodiment of the above image processing method, the above step S150 of obtaining the fourth barycentric coordinate of the sample point relative to the initial primitive based on the second barycentric coordinate and the third barycentric coordinate includes: performing the two-dimensional linear interpolation based on the second barycentric coordinate and the third barycentric coordinate, so as to obtain the fourth barycentric coordinate of the sample point relative to the initial primitive.

It can be understood that the above second barycentric coordinate is the barycentric coordinate of the second vertex of the second primitive in the screen space relative to the initial primitive in the clip space, and the third barycentric coordinate is the barycentric coordinate of the sample point within the second primitive in the screen space relative to the second primitive. Therefore, if the second barycentric coordinate of the second vertex of the second primitive relative to the initial primitive is taken as the attribute value in the above attribute interpolation scheme, and the third barycentric coordinate of the sample point relative to the second primitive is determined as the barycentric coordinate coefficient, the fourth barycentric coordinate of the sample point relative to the initial primitive can be obtained by the two-dimensional linear interpolation.

In the above scheme, the fourth barycentric coordinate of the sample point in the screen space relative to the initial primitive in the clip space can be obtained by the method of two-dimensional linear interpolation, and then the attribute value of the sample point can be determined by the fourth barycentric coordinate and the first attribute information of the initial primitive. Compared with the scheme of interpolating the attribute value directly in the related art, the above scheme simplifies the computation process, which is beneficial to improve the computational efficiency of the above image processing method.

It can be understood that the scheme in the above step S150 of obtaining the second perspective correction coefficient is similar to the scheme of obtaining the fourth barycentric coordinate, and the embodiments of the present invention will not be repeated. The scheme in the above step S160 of performing the perspective correction on the fourth barycentric coordinate by using the second perspective correction coefficient is similar to the scheme of performing the perspective correction on the first barycentric coordinate by using the first perspective correction coefficient in the foregoing, wherein the specific embodiment please refers to the above content, and it will not be repeated herein.

The scheme of the above step S170 for obtaining the second attribute information is introduced below.

As an optional embodiment of the above image processing method, the above step S170 of obtaining second attribute information of the sample point based on the fourth barycentric coordinate after performing the perspective correction and first attribute information includes: performing the two-dimensional linear interpolation based on the fourth barycentric coordinate after performing the perspective correction and the first attribute information, so as to obtain the second attribute information of the sample point.

In the above scheme, the second attribute information of the sample point can be obtained by using the method of two-dimensional linear interpolation by utilizing the fourth barycentric coordinate and the first attribute information both in the clip space, which simplifies the calculation process of the attribute value and is beneficial to improve the computational efficiency of the above image processing method.

It can be understood that the embodiment in the above step S180 of shading the sample point by using the second attribute information can be referred to the related art, and the embodiments of the present invention will not be repeated.

It can be understood that the scheme of interpolating the attribute value by using the invariant property that the sum of the components of the barycentric coordinate equals one still has room for simplification in certain scenarios, such as when the types or the number of attributes to be calculated is small. On this basis, the embodiments of the present invention provide the following scheme.

As an optional embodiment of the above image processing method, the above image processing method further includes: determining whether the types or the number of attributes to be calculated is larger than a preset threshold, wherein when the types or the number of attributes to be calculated is larger than the preset threshold, performing the step S110 to the step 180.

It can be understood that the above image processing method can adaptively select a specific acquisition method of the attribute value of the sample point based on the preset threshold, wherein it selects the acquisition scheme of the attribute value of the sample point in the above step S110 to the step 180 when the types or the number of attributes to be calculated is larger than the preset threshold, and it can select a sample point attribute value calculation scheme with a smaller calculation amount when the types or the number of attributes to be calculated is not larger than the preset threshold, thereby realizing adaptive adjustment of the sample point attribute value calculation scheme based on the types or the number of attributes to be calculated.

In the above scheme, the adaptive adjustment of the sample point attribute value calculation scheme is realized through the types or the number of attributes to be calculated and the preset threshold, which is beneficial to further reduce the calculation amount of the sample point attribute value calculation scheme, thus improving the computational efficiency of the above image processing method.

The attribute value calculation scheme that can be used when the types or the number of attributes to be calculated is not larger than the preset threshold is introduced below.

Referring to FIG. 6, as an optional embodiment of the above image processing method, when the types or the number of attributes to be calculated is not larger than the preset threshold, performing the following steps:

Step S210: obtaining the first barycentric coordinate of the first vertex relative to initial primitive, third attribute information, and a third perspective correction coefficient;

step S220: performing a perspective correction on the third attribute information by using the third perspective correction coefficient;

step S230: obtaining a third barycentric coordinate of the sample point relative to the second primitive and a fourth perspective correction coefficient;

step S240: obtaining the second attribute information of the sample point based on the third barycentric coordinates and the third attribute information after performing the perspective correction;

step S250: performing the perspective correction on the second attribute information by using the fourth perspective correction coefficient; and

step S260: shading the sample point based on the second attribute information after the perspective correction.

The space corresponding to the barycentric coordinate related to the above steps S210 to S260 is described below.

The barycentric coordinate relative to the clip space includes: a first barycentric coordinate.

The barycentric coordinate relative to the screen space includes: a third barycentric coordinate.

The scheme for determining the above preset threshold in a certain scene is introduced below.

Assuming the number of initial triangle primitives to be processed is n; the types or the number of attributes to be calculated of the triangle primitive vertexes is m; the number of sample points in the triangle primitive is s; the proportion of all initial triangle primitives that need to be clipped is $a$; the number of linear interpolations to be performed is L; for the sample point attribute value calculation scheme shown in the above steps S110 to S180, the number of linear interpolations that need to be performed in the clip space is:

$$L^{clip} = n^{clip} \cdot 2 \cdot a,$$

where $n^{clip}$ is the number of initial triangle primitives in the clip space.

The number of linear interpolations that need to be performed in screen space is:

$$L^{screen} = n^{screen} \cdot 2 \cdot a,$$

where $n^{screen}$ is the number of triangle primitives in the screen space;

For the sample point attribute value calculation scheme shown in the above steps S210 to S260, the number of linear interpolations that need to be performed in the clip space is:

$$L^{clip\prime} = n^{clip} \cdot m \cdot a.$$

The number of linear interpolations that need to be performed in screen space is:

$$L^{screen\prime} = n^{screen} \cdot m \cdot s.$$

It can be understood that in addition to the linear interpolation, the calculation amount for each triangle primitive includes (1 + 2m) additions and 3m multiplications. In order to make the results of the comparison of calculation amount more intuitive, the linear interpolation in the clip space is simplified to the linear interpolation in the screen space, and the interpolation in the screen space can be adopted as a plane-equation interpolation method, so that the number of additions and multiplications required for the calculation scheme of the attribute values of the sample points shown in the above step S110 to step S180 are respectively:

$$Add_1 = n^{clip} \cdot (17 + 6a) + n^{screen} \cdot (18 + 6s + 2m),$$

$$Multi_1 = n^{clip} \cdot (14 + 4a) + n^{screen} \cdot (14 + 4s + 3m).$$

The number of additions and multiplications required for the calculation scheme of the attribute values of the sample points shown in the above step S210 to step S260 are respectively:

$$Add_2 = n^{clip} \cdot (5 + 2a + 6m + 2am) + n^{screen} \cdot (5 + 2s + 6m + 2sm),$$

$$Multi_2 = n^{clip} \cdot (2 + 6m + 2am) + n^{screen} \cdot (2 + 6m + 2sm).$$

After calculation, it can be concluded that when the types or the number of attributes to be calculated for the triangle primitive is respectively larger than or equal to 3 and 4, the calculation amount of the sample point attribute value calculation scheme shown in steps S110 to S180 will be better than that of the sample point attribute value calculation scheme shown in steps S210 to S260. Accordingly, the above preset threshold can be set as 3 or 4.

It can be understood the above scheme of adaptively selecting the calculation of the sample point attribute value by the types or the number of attributes to be calculated and the preset threshold, can be controlled by the software in the top level (the highest level of the software layer) through the configuration of register and can realize the selection of the adaptive interpolation scheme in conjunction with the hardware method.

In the above scheme, when the types or the number of attributes to be calculated is not larger than the preset threshold, the attribute value of the sample point in the screen space is obtained by the method of directly calculating the attribute value of the new vertex in the clip space, thereby realizing adaptive selection to the sample point attribute value calculation scheme, which is beneficial to further reduce the calculation amount of the sample point attribute value calculation scheme, thus improving the computational efficiency of the above image processing method.

The portion of the sample point attribute value calculation scheme shown in steps S210 to S260 above that is different from the sample point attribute value calculation scheme shown in steps S110 to S180 above is described below.

As an optional embodiment of the above image processing method, the above step S210 of obtaining the third attribute information includes: performing a three-dimensional linear interpolation based on the first attribute information and the first barycentric coordinate of the initial primitive for the new primitive generated after the clipping process, so as to obtain the third attribute information.

It can be understood that both the initial primitive and the new primitives generated after the clipping process are in the clip space, and the first barycentric coordinate of the first vertex is also relative to the initial primitive in the clip space. Therefore, based on the first attribute information of the initial vertex in the initial primitive and the barycentric coordinate of the new vertex generated by the clipping process, the third attribute information of the new vertexes can be directly interpolated.

In the above scheme, the three-dimensional linear interpolation is performed directly based on the first attribute information and the first barycentric coordinate of the initial primitive, which can quickly obtain the third attribute information of the new primitive in the clip space, and is beneficial to improve the computational efficiency of the above image processing method.

As an optional embodiment of the above image processing method, the above step S240 of obtaining the second attribute information of the sample point based on the third barycentric coordinates and the third attribute information after performing the perspective correction includes: performing a two-dimensional linear interpolation based on the third barycentric coordinate and the third attribute information after the perspective correction, so as to obtain the second attribute information of the sample point.

It can be understood that the above third barycentric coordinate is the barycentric coordinate of the sample point relative to the second primitive in the screen space, and the third attribute information is the vertex attribute information of the first primitive after the clipping process. Therefore, the two-dimensional linear interpolation can be performed directly based on the third barycentric coordinate and the third attribute information after the perspective correction, so as to obtain the second attribute information of the sample point.

In the above scheme, the two-dimensional linear interpolation is performed directly based on the third barycentric coordinate and the third attribute information after the perspective correction, so as to obtain the second attribute information of the sample point, which can quickly obtain the attribute value of the sample point in the screen space, and is beneficial to improve the computational efficiency of the above image processing method.

Taking the triangle primitive as an example, the optional embodiment of the linear interpolation scheme of the above two sample point attribute value calculation schemes is described below.

It is understood that for any triangle in two dimensions, the attribute value $A$ of any one point $(x, y)$ inside can be obtained by linear interpolation of the barycentric coordinate.

$$A = ([(x_2 - x_1)(y - y_1) - (x - x_1)(y_2 - y_1)] \cdot a_0 + [(x_0 - x_2)(y - y_2) -$$
$$(x - x_2)(y_0 - y_2)] \cdot a_1 + [(x_1 - x_0)(y - y_0) - (x - x_0)(y_1 - y_0)] \cdot a_2)/2Area,$$

where $(x_1, y_1)$, $(x_2, y_2)$, and $(x_3, y_3)$ are the coordinates of the three vertexes of the triangle; $a_0$, $a_1$, and $a_2$ are the attribute values of the three vertexes of the triangle; and *Area* is the area of the triangle.

Assuming $\Delta y = y - y_0$, $\Delta x = x - x_0$, then the above equation can be expressed as:

$$A = (\Delta y[(a_1 - a_0)(x_0 - x_2) + (a_2 - a_0)(x_1 - x_0)] - \Delta x[(a_1 - a_0)(y_0 - y_2) +$$
$$(a_2 - a_0)(y_1 - y_2)] + a_0[(x_2 - x_1)(y_0 - y_1) - (x_0 - x_1)(y_2 - y_1)])/2Area.$$

The above equation can be converted to:

$$Attr_{(x,y)} = Attr_{(x_0,y_0)} + (dAttr/dx) * (x - x_0) + (dAttr/dy) * (y - y_0),$$

where *dAttr/dx* and *dAttr/dy* represent slopes of the attribute relative to the *x* direction and the y direction respectively.

The above formula is the linear interpolation scheme of the plane equation (plane equation). Since the linear interpolation of the barycentric coordinate and the linear interpolation of the plane equation are consistent, the linear interpolation of the barycentric coordinate, the linear interpolation of the vertex attribute value, and the linear interpolation of the perspective correction coefficient in the embodiments of the present invention can use both the linear interpolation of the plane equation, and can use the linear interpolation of the barycentric coordinate.

In addition, in the practical application process, the method of the linear interpolation can be flexibly selected based on PPA (representing performance, power, and area) effect, so as to achieve the optimal PPA effect.

As an optional embodiment of the above image processing method, the above three-dimensional linear interpolation includes:

a three-dimensional linear interpolation of a barycentric coordinate, and/or a three-dimensional linear interpolation of a plane equation.

As an optional embodiment of the above image processing method, the above two-dimensional linear interpolation includes:

a two-dimensional linear interpolation of a barycentric coordinate, and/or a two-dimensional linear interpolation of a plane equation.

In addition, it can be understood that in some scenarios, for the interpolation order between multiple sample points in the same primitive, it is generally to calculate all the attribute values of the current sample point before switching to the next sample point.

It can be understood that in the above related art, when the performance in the sample point attribute value calculation scheme is the main consideration, since the linear interpolation needs to be calculated many times and fixed, the amount of Arithmetic Logical Unit (ALU) needs to be increased if you don't want to block the subsequent data and affect the performance, which will significantly increase the hardware area. In addition, since the interpolation of attribute values between multiple points has certain ordering requirements, some intermediate variables need to be remained until the end of the interpolation of attribute values for the entire triangle primitive. When more types of attributes need to be acquired, a larger buffer is required to store the intermediate variables. When the drawing area is smaller, more buffer is needed in order to process more primitives in the pipeline inside the rasterization. On this basis, the embodiments of the present invention provide the following scheme.

As an optional embodiment of the above image processing method, the above image processing method further includes: storing attribute information of a reusable vertex at the same storage address, wherein the reusable vertex is configured to characterize the same vertex between target primitives, and the target primitives are primitives that are located in the same space and have at least one primitive vertex overlapping.

Taking the vertex V4' shown in FIG. 5 as an example, the vertex V4' is shared by the primitives V0'V3'V4' and the primitives V0'V4'V2'. At this time, V4' is a reusable vertex, and the second attribute information of the vertex V4' in the screen space can be saved in the same storage address. When shading the other triangle primitives in the screen space with V4' as a vertex, the second attribute information of the vertex V4' can be obtained directly from the storage address. When calculating the attribute values of the sample points, it can only calculate the non-reusable vertexes, which improves the image processing performance to a certain extent.

It can be understood that in addition to the second attribute information of the primitive vertexes in the screen space, in some scenarios, other information of the primitive vertexes in the screen space, such as the barycentric coordinate, can be stored. Of course, it can also store relevant information about primitive vertex in the clip space.

In addition, it is understood that for the above two sample point attribute value calculation schemes, the storage address space required for sample point attribute value calculation can be saved by the method of storing the attribute information of reusable vertexes in the same storage address, thereby reducing the hardware area requirement.

In the realization of the above scheme, the attribute information of the reusable vertexes is stored in the same storage address. On the one hand, it can reduce the repetitive calculation amount for the same vertex, which is beneficial to improve the computational efficiency of the above image processing method; and on the other hand, it can save the storage address space, which is beneficial to improve the area requirement of the above image processing method on the hardware.

It should be pointed that although the above introduction takes the triangle primitive as the introduction object, it is not a specific limitation on the types of primitives. In fact, the plane equation interpolation scheme and the barycentric coordinate interpolation scheme are not limited to triangles, but any planar two-dimensional image with similar properties can be adopted, i.e., the primitives in embodiments of the present invention can use various planar two-dimensional shapes.

In addition, it can be understood that since the barycentric coordinate component has the property of summing to 1, taking a triangle primitive as an example, in the actual calculation process, only two components in the barycentric coordinates can be taken as the calculation object, and after obtaining BC values of the two components by calculation, the BC value of the third component can be obtained by differentiating from 1, thereby further reducing the calculation amount of the attribute values of the sample points, and thus further improving the computational efficiency of the above image processing method.

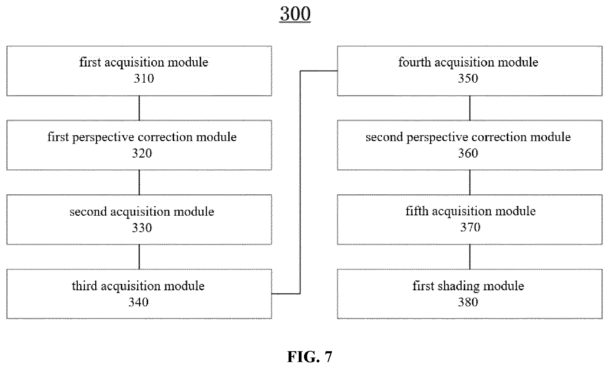

Referring to FIG. 7, the embodiments of the present invention further provide an image processor 300, including:

a first acquisition module 310, configured to obtain a first barycentric coordinate of a first vertex relative to an initial primitive in an image frame and a first perspective correction coefficient, wherein the first vertex is a vertex of the first primitive in a clip space; the first primitive includes a new primitive generated after performing a clipping process on the initial primitive, and/or the initial primitive without the clipping process; and the initial vertex is a vertex of the initial primitive;

a first perspective correction module 320, configured to perform a perspective correction on the first barycentric coordinate by using the first perspective correction coefficient;

a second acquisition module 330, configured to convert the first barycentric coordinate after performing the perspective correction to a screen space, so as to obtain a second barycentric coordinate of the second vertex relative to the initial primitive, wherein the second vertex is a vertex of a second primitive, and the second primitive is obtained by converting the first primitive to the screen space;

a third acquisition module 340, configured to obtain a third barycentric coordinate of a sample point relative to the second primitive, wherein the sample point is a sample point in the second primitive;

a fourth acquisition module 350, configured to obtain a fourth barycentric coordinate of the sample point relative to the initial primitive and the second perspective correction coefficient based on the second barycentric coordinate and the third barycentric coordinate;

a second perspective correction module 360, configured to perform a perspective correction on the fourth barycentric coordinate by using the second perspective correction coefficient;

a fifth acquisition module 370, configured to obtain second attribute information of the sample point based on the fourth barycentric coordinate after performing the perspective correction and first attribute information, wherein the first attribute information is attribute information of the initial vertex; and

a first shading module 380, configured to shade the sample point based on the second attribute information.

As an optional embodiment of the above image processor, the above image processor further includes:

a calculation scheme adaptive selection module, configured to determine whether the types or the number of attributes to be calculated is larger than a preset threshold, wherein when the types or the number of attributes to be calculated is larger than the preset threshold, invoking the above first acquisition module 310, the first perspective correction module 320, the second acquisition module 330, the third acquisition module 340, the fourth acquisition module 350, the second perspective correction module 360, the fifth acquisition module 370, and the first shading module 380.

As an optional embodiment of the above image processor, the above image processor further includes:

a sixth acquisition module, configured to obtain the first barycentric coordinate of the first vertex relative to initial primitive, third attribute information, and a third perspective correction coefficient;

a third perspective correction module, configured to perform a perspective correction on the third attribute information by using the third perspective correction coefficient;

a seventh acquisition module, configured to obtain a third barycentric coordinate of the sample point relative to the second primitive and a fourth perspective correction coefficient;

an eighth acquisition module, configured to obtain the second attribute information of the sample point based on the third barycentric coordinates and the third attribute information after performing the perspective correction;

a fourth perspective correction module, configured to perform the perspective correction on the second attribute information by using the fourth perspective correction coefficient; and

a second shading module, configured to shade the sample point based on the second attribute information after the perspective correction.

The above calculation scheme adaptive selection module is used to determine whether the types or the number of attributes to be calculated is larger than a preset threshold, wherein when the types or the number of attributes to be calculated is not larger than the preset threshold, invoking the above sixth acquisition module, the third perspective correction module, the seventh acquisition module, the eighth acquisition module, the fourth perspective correction module, and the second shading module.

As an optional embodiment of the above image processor, the above sixth acquisition module is specifically configured to perform a three-dimensional linear interpolation based on the first attribute information and the first barycentric coordinate of the initial primitive for the new primitive generated after the clipping process, so as to obtain the third attribute information of the new primitive.

As an optional embodiment of the above image processor, the above eighth acquisition module is specifically configured to perform a two-dimensional linear interpolation based on the third barycentric coordinate and the third attribute information after the perspective correction, so as to obtain the second attribute information of the sample point.

As an optional embodiment of the above image processor, the above sixth acquisition module is specifically configured to perform the three-dimensional linear interpolation based on a clipping position of the new vertex and the barycentric coordinate of the initial vertex for the new vertex generated after the clipping process, so as to obtain a barycentric coordinate of the new vertex relative to the initial primitive.

As an optional embodiment of the above image processor, the above fourth acquisition module 350 is specifically configured to perform a two-dimensional linear interpolation based on the second barycentric coordinate and the third barycentric coordinate, so as to obtain the fourth barycentric coordinate of the sample point relative to the initial primitive.

As an optional embodiment of the above image processor, the above fifth acquisition module 370 is specifically configured to perform the two-dimensional linear interpolation based on the fourth barycentric coordinate after performing the perspective correction and the first attribute information, so as to obtain the second attribute information of the sample point.

As an optional embodiment of the above image processor, the above three-dimensional linear interpolation includes: a three-dimensional linear interpolation of a barycentric coordinate, and/or a three-dimensional linear interpolation of a plane equation.

As an optional embodiment of the above image processor, the above two-dimensional linear interpolation includes: a two-dimensional linear interpolation of a barycentric coordinate, and/or a two-dimensional linear interpolation of a plane equation.

As an optional embodiment of the above image processor, the above image processor further includes:
a reusable vertex storage module, configured to store attribute information of a reusable vertex at the same storage address, wherein the reusable vertex is configured to characterize the same vertex between target primitives, and the target primitives are primitives that are located in the same space and have at least one primitive vertex overlapping.

Based on the same inventive concept, the embodiments of the present invention provide an electronic device, including: an image processor, wherein the image processor is any one of the above image processors 300.

It can be understood that the number of image processors deployed in the above electronic device can be one or more, which may be an integrated circuit chip with signal processing capability. The above processor can be a data processing core of GPU (graphics processing unit), CPU (central processing unit), AI (artificial intelligence), NPU (neural network processing unit), ISP (image signal processor), DPU (display processing unit), VPU (video processing unit), DSP (digital signal processor), etc., or it can be a processor chip applied to some scenarios such as large-scale data computing. The foregoing is merely exemplary and should not be construed as a limitation of the present invention.

The embodiments of the present invention further provide a computer readable storage medium, wherein the computer readable storage medium stores the computer program instructions. When the computer program instruction is read and run by the processor of the computer, the image processing method provided by the embodiments of the present invention is executed.

The embodiments of the present invention further provide a computer program product, and the computer program product includes computer programs, wherein the image processing method described in any one of the above is executed and realized by the computer program.

The foregoing are merely embodiments of the present invention, and are not used to limit the scope of the protection of the present invention. For those skilled in the art, the present invention may have various changes and variations. Any modifications, equivalent replacements, improvements, etc., made within the spirit and principles of the present invention, shall be included within the scope of protection of the present invention.

## Claims

1. An image processing method, **characterized in that** the method comprises:

   obtaining a first barycentric coordinate of a first vertex relative to an initial primitive in an image frame and a first perspective correction coefficient, wherein the first vertex is a vertex of a first primitive in a clip space; the first primitive comprises a new primitive generated after performing a clipping process on the initial primitive, and/or the initial primitive without the clipping process;
   performing a perspective correction on the first barycentric coordinate by using the first perspective correction coefficient;
   converting the first barycentric coordinate after the perspective correction to a screen space to obtain a second barycentric coordinate of a second vertex relative to the initial primitive, wherein the second vertex is a vertex of a second primitive, and the second primitive is obtained by converting the first primitive to the screen space;
   obtaining a third barycentric coordinate of a sample point relative to the second primitive, wherein the sample point is a sample point in the second primitive;

obtaining a fourth barycentric coordinate of the sample point relative to the initial primitive and a second perspective correction coefficient based on the second barycentric coordinate and the third barycentric coordinate;

performing a perspective correction on the fourth barycentric coordinate by using the second perspective correction coefficient;

obtaining second attribute information of the sample point based on the fourth barycentric coordinate after the perspective correction and first attribute information, wherein the first attribute information is attribute information of an initial vertex, and the initial vertex is a vertex of the initial primitive; and

shading the sample point based on the second attribute information.

2. The image processing method according to claim 1, wherein the method further comprises:

determining whether the types or the number of attributes to be calculated is larger than a preset threshold, wherein

when the types or the number of attributes to be calculated is larger than the preset threshold, performing a step: obtaining the first barycentric coordinate of the first vertex relative to the initial primitive in the image frame and the first perspective correction coefficient.

3. The image processing method according to claim 2, wherein the method further comprises:
when the types or the number of attributes to be calculated is not larger than the preset threshold, performing following steps:

obtaining the first barycentric coordinate of the first vertex relative to the initial primitive, third attribute information, and a third perspective correction coefficient;

performing a perspective correction on the third attribute information by using the third perspective correction coefficient;

obtaining the third barycentric coordinate of the sample point relative to the second primitive and a fourth perspective correction coefficient;

obtaining the second attribute information of the sample point based on the third barycentric coordinate and the third attribute information after performing the perspective correction;

performing a perspective correction on the second attribute information by using the fourth perspective correction coefficient; and

shading the sample point based on the second attribute information after the perspective correction.

4. The image processing method according to claim 3, wherein the step of obtaining the third attribute information comprises:
performing a three-dimensional linear interpolation based on the first attribute information and the first barycentric coordinate of the initial primitive for the new primitive generated after the clipping process, to obtain the third attribute information of the new primitive.

5. The image processing method according to claim 3, wherein the step of obtaining the second attribute information of the sample point based on the third barycentric coordinate and the third attribute information after performing the perspective correction comprises:
performing a two-dimensional linear interpolation based on the third barycentric coordinate and the third attribute information after the perspective correction, to obtain the second attribute information of the sample point.

6. The image processing method according to claim 3, wherein the step of obtaining the first barycentric coordinate comprises:
performing a three-dimensional linear interpolation based on a clipping position of a new vertex and a barycentric coordinate of the initial vertex for the new vertex generated after the clipping process, to obtain a barycentric coordinate of the new vertex relative to the initial primitive.

7. The image processing method according to claim 1, wherein the step of obtaining a fourth barycentric coordinate of the sample point relative to the initial primitive based on the second barycentric coordinate and the third barycentric coordinate comprises:
performing a two-dimensional linear interpolation based on the second barycentric coordinate and the third barycentric coordinate, to obtain the fourth barycentric coordinate of the sample point relative to the initial primitive.

8. The image processing method according to claim 1, wherein the step of obtaining second attribute information of the sample point based on the fourth barycentric coordinate after performing the perspective correction and first attribute information comprises:

   performing a two-dimensional linear interpolation based on the fourth barycentric coordinate after performing the perspective correction and the first attribute information, to obtain the second attribute information of the sample point.

9. The image processing method according to claim 4 or 6, wherein the three-dimensional linear interpolation comprises: a three-dimensional linear interpolation of a barycentric coordinate, and/or a three-dimensional linear interpolation of a plane equation.

10. The image processing method according to any one of claims 5, 7, and 8, wherein the two-dimensional linear interpolation comprises:

    a two-dimensional linear interpolation of a barycentric coordinate, and/or a two-dimensional linear interpolation of a plane equation.

11. The image processing method according to any one of claims 1~8, wherein the method further comprises:

    storing attribute information of a reusable vertex at the same storage address, wherein the reusable vertex is configured to characterize the same vertex between target primitives, and the target primitives are primitives that are located in the same space and have at least one primitive vertex overlapping.

12. An image processor, **characterized by** comprising:

    a first acquisition module, configured to obtain a first barycentric coordinate of a first vertex relative to an initial primitive in an image frame and a first perspective correction coefficient, wherein the first vertex is a vertex of a first primitive in a clip space; the first primitive comprises a new primitive generated after performing a clipping process on the initial primitive, and/or the initial primitive without the clipping process;

    a first perspective correction module, configured to perform a perspective correction on the first barycentric coordinate by using the first perspective correction coefficient;

    a second acquisition module, configured to convert the first barycentric coordinate after performing the perspective correction to a screen space, to obtain a second barycentric coordinate of a second vertex relative to the initial primitive, wherein the second vertex is a vertex of a second primitive, and the second primitive is obtained by converting the first primitive to the screen space;

    a third acquisition module, configured to obtain a third barycentric coordinate of a sample point relative to the second primitive, wherein the sample point is a sample point in the second primitive;

    a fourth acquisition module, configured to obtain a fourth barycentric coordinate of the sample point relative to the initial primitive and a second perspective correction coefficient based on the second barycentric coordinate and the third barycentric coordinate;

    a second perspective correction module, configured to perform a perspective correction on the fourth barycentric coordinate by using the second perspective correction coefficient;

    a fifth acquisition module, configured to obtain second attribute information of the sample point based on the fourth barycentric coordinate after performing the perspective correction and first attribute information, wherein the first attribute information is attribute information of an initial vertex, and the initial vertex is a vertex of the initial primitive; and

    a first shading module, configured to shade the sample point based on the second attribute information.

13. An electronic device, **characterized by** comprising:

    an image processor, wherein the image processor is the image processor according to claim 12.

14. A computer readable storage medium, **characterized in that** the computer readable storage medium stores computer instructions, and a computer executes the method according to any one of claims 1-11 when the computer instructions are executed by the computer.

15. A computer program product, **characterized in that** the computer program product comprises a computer program, and the method according to any one of claims 1~11 is realized when the computer program is executed by a processor.

obtaining a triangle primitive in the clip space

Whether it needs to be clipped?

yes

no

a three-dimensional linear interpolation in the clip space

calculating an attribute value of the new vertex after clipping and a perspective correction coefficient w

performing the perspective correction on an attribute value of a new vertex by using w

performing the perspective correction on an attribute value of the vertex of the initial triangle by directly using w

converting the vertex of triangle to the screen space

a two-dimensional linear interpolation in the screen space

for any sample point in the triangle, performing the interpolation based on the attribute value of the vertex and the barycentric coordinate (BC value) of the sample point, so as to obtain an attribute value of the sample point and the perspective correction coefficient 1/w

performing the perspective correction on the attribute value of the sample point by using 1/w

obtaining the attribute value of the sample point

**FIG. 1**

obtaining a first barycentric coordinate of a first vertex relative to an initial primitive in an image frame and a first perspective correction coefficient ⌒ S110

performing a perspective correction on the first barycentric coordinate by using the first perspective correction coefficient ⌒ S120

converting the first barycentric coordinate after performing the perspective correction to a screen space, so as to obtain a second barycentric coordinate of the second vertex relative to the initial primitive ⌒ S130

obtaining a third barycentric coordinate of a sample point relative to the second primitive ⌒ S140

obtaining a fourth barycentric coordinate of the sample point relative to the initial primitive and the second perspective correction coefficient based on the second barycentric coordinate and the third barycentric coordinate ⌒ S150

performing a perspective correction on the fourth barycentric coordinate by using the second perspective correction coefficient ⌒ S160

obtaining second attribute information of the sample point based on the fourth barycentric coordinate after performing the perspective correction and first attribute information ⌒ S170

shading the sample point based on the second attribute information ⌒ S180

**FIG. 2**

**FIG. 3**

**FIG. 4**

VO'

clip operation

VO'

V3'

VO'

V3'

V1'     V2'

V1'   V4'     V2'

V1'  V4'     V2'

**FIG. 5**

whether the types or the number
of attributes to be calculated is larger than
a preset threshold?

yes

no

obtaining a first barycentric coordinate of a first vertex relative to an
initial primitive in an image frame and a first perspective correction
coefficient — S110

obtaining the first barycentric coordinate of the first vertex relative to
initial primitive, third attribute information and a third perspective
correction coefficient — S210

performing a perspective correction on the first barycentric coordinate by using the
first perspective correction coefficient — S120

performing a perspective correction on the third attribute information by
using the third perspective correction coefficient — S220

converting the first barycentric coordinate after performing the perspective
correction to a screen space, so as to obtain a second barycentric coordinate of the
second vertex relative to the initial primitive — S130

obtaining a third barycentric coordinate of the sample point relative to
the second primitive and a fourth perspective correction coefficient — S230

obtaining a third barycentric coordinate of a sample point relative to
the second primitive — S140

obtaining the second attribute information of the sample point based on
the third barycentric coordinates and the third attribute information after
performing the perspective correction — S240

obtaining a fourth barycentric coordinate of the sample point relative to the initial
primitive and the second perspective correction coefficient based on the second
barycentric coordinate and the third barycentric coordinate — S150

performing the perspective correction on the second attribute
information by using the fourth perspective correction coefficient — S250

performing a perspective correction on the fourth barycentric coordinate
by using the second perspective correction coefficient — S160

shading the sample point based on the second attribute information after
the perspective correction — S260

obtaining second attribute information of the sample point based on the
fourth barycentric coordinate after performing the perspective correction
and first attribute information — S170

shading the sample point based on the second attribute information — S180

**FIG. 6**

300

| first acquisition module 310 | fourth acquisition module 350 |
|---|---|
| first perspective correction module 320 | second perspective correction module 360 |
| second acquisition module 330 | fifth acquisition module 370 |
| third acquisition module 340 | first shading module 380 |

**FIG. 7**

## INTERNATIONAL SEARCH REPORT

| International application No. |
| --- |
| **PCT/CN2024/139656** |

### A. CLASSIFICATION OF SUBJECT MATTER

G06T15/20(2011.01)i; G06T1/20(2006.01)i

According to International Patent Classification (IPC) or to both national classification and IPC

### B. FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNTXT, USTXT, DWPI, CNKI, IEEE: 图像, 图元, 顶点, 校正, 矫正, 裁剪, 顶点, 重心, 采样, 渲染, image, primitive, vertex, correction, rectification, cropping, vertex, barycentric, sampling, rendering

### C. DOCUMENTS CONSIDERED TO BE RELEVANT

| Category* | Citation of document, with indication, where appropriate, of the relevant passages | Relevant to claim No. |
| --- | --- | --- |
| A | CN 118644493 A (XIANGDIXIAN COMPUTING TECHNOLOGY (CHONGQING) CO., LTD.) 13 September 2024 (2024-09-13) description, paragraph 95 | 1-15 |
| A | CN 118747705 A (MOORE THREADS TECHNOLOGY CO., LTD.) 08 October 2024 (2024-10-08) entire document | 1-15 |
| A | CN 116843811 A (TENCENT TECHNOLOGY (CHENGDU) CO., LTD.) 03 October 2023 (2023-10-03) entire document | 1-15 |
| A | US 2002030693 A1 (BALDWIN DAVID ROBERT) 14 March 2002 (2002-03-14) entire document | 1-15 |
| A | US 6512524 B1 (ATI INTERNATIONAL, SRL) 28 January 2003 (2003-01-28) entire document | 1-15 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 July 2025** | **06 August 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/139656**

| Patent document cited in search report | | | Publication date (day/month/year) | Patent family member(s) | | | Publication date (day/month/year) |
|---|---|---|---|---|---|---|---|
| CN | 118644493 | A | 13 September 2024 | None | | | |
| CN | 118747705 | A | 08 October 2024 | None | | | |
| CN | 116843811 | A | 03 October 2023 | WO | 2023179091 | A1 | 28 September 2023 |
| | | | | US | 2023419561 | A1 | 28 December 2023 |
| | | | | HK | 40099900 | A0 | 26 April 2024 |
| | | | | SG | 11202402910 | A | 31 May 2024 |
| US | 2002030693 | A1 | 14 March 2002 | None | | | |
| US | 6512524 | B1 | 28 January 2003 | None | | | |

Form PCT/ISA/210 (patent family annex) (July 2022)